(19) Europäisches Patentamt / European Patent Office / Office européen des brevets

(11) EP 4 219 615 A1

(12) **EUROPEAN PATENT APPLICATION**
published in accordance with Art. 153(4) EPC

(43) Date of publication:
**02.08.2023 Bulletin 2023/31**

(21) Application number: **21886071.6**

(22) Date of filing: **21.10.2021**

(51) International Patent Classification (IPC):
***C08K 5/548*** (2006.01) ***C08K 9/06*** (2006.01)
***C08L 7/00*** (2006.01) ***C08L 9/00*** (2006.01)
***C08K 3/36*** (2006.01)

(52) Cooperative Patent Classification (CPC):
**C08K 3/36; C08K 5/548; C08K 9/06; C08L 7/00; C08L 9/00**

(86) International application number:
**PCT/JP2021/038997**

(87) International publication number:
**WO 2022/091953 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.10.2020 JP 2020182461**
**10.11.2020 JP 2020187020**

(71) Applicant: **Tokuyama Corporation**
**Shunan-shi, Yamaguchi 745-8648 (JP)**

(72) Inventors:
- **KONDOU Manabu**
  **Shunan-shi, Yamaguchi 745-8648 (JP)**
- **NAKAMURA Masahiro**
  **Shunan-shi, Yamaguchi 745-8648 (JP)**

(74) Representative: **Canzler & Bergmeier Patentanwälte Partnerschaft mbB**
**Despag-Straße 6**
**85055 Ingolstadt (DE)**

(54) **METHOD FOR PRODUCING RUBBER COMPOSITION, FUMED SILICA FOR RUBBER COMPOSITION, AND RUBBER COMPOSITION**

(57) [Problem] To provide: simple manufacturing of a rubber composition including fumed silica with a mixer-type kneading device that is typically used industrially; a rubber composition including fumed silica; and the fumed silica included therein. [Solution] A method for producing a rubber composition comprising: a step for subjecting fumed silica having a BET specific surface area of not less than 200 m2/g to a compression process so as to obtain compressed fumed silica having a tap density of not less than 200 g/L; and a step for kneading the compressed fumed silica with diene rubber. Fumed silica for a rubber composition, having a tap density of not less than 200 g/L, having a BET specific surface area of not less than 200 m2/g, and having been subjected to a surface treatment with a mercapto-thiocarboxylate oligomer. A rubber composition obtained by mixing compressed fumed silica which has a tap density of not less than 200 g/L and which has a BET specific surface area of not less than 200m2/g, natural rubber, and a mercapto-thiocarboxylate oligomer.

EP 4 219 615 A1

## Description

Technical Field

The present invention relates to a method for producing a rubber composition, a fumed silica for rubber composition, and a rubber composition.

Background Art

A heavy-duty tire used for a truck, a bus, or the like has a larger load weight and a longer travel distance than those of a passenger car tire and is thus required to have high wear resistance performance. In addition, in recent years, in the heavy-duty tire used for a truck, a bus, or the like, as seen in the labeling systems of Japan and Europe and the Smart Way regulations of North America, it is important to reduce an environmental burden, and in particular, it is required to reduce rolling resistance and improve fuel efficiency.

As an index of rolling resistance of a rubber composition such as a tire, tanδ at 60°C (hereinafter, referred to as tanδ (60°C)), which is evaluated as dynamic viscoelastic properties, is generally used. It indicates that, in the rubber composition, the smaller the tanδ (60°C), the lower the rolling resistance. In addition, it indicates that the smaller the tanδ (60°C), the lower an exothermic property. Therefore, by reducing the tanδ (60°C), overheating of the tire during driving can be prevented, and durability can also be improved. In the rubber composition, tanδ at 0°C (hereinafter, referred to as tanδ (0°C)) is used as an index for evaluating wet friction (wet grip performance), but is not so important in the heavy-duty tire.

Examples of a method for reducing the tanδ (60°C) of the rubber composition include reducing a blending amount of carbon black to be blended in the rubber composition and increasing a particle diameter of the carbon black. However, in this method, mechanical properties such as tensile strength at break, tensile elongation at break, and rubber hardness of the rubber composition decrease, and when such a rubber composition is used for the heavy-duty tire, there arises a problem that wear resistance and uneven wear resistance decrease.

Patent Literatures 1 to 3 propose blending a fumed silica in a rubber composition as the method of reducing the rolling resistance tanδ (60°C) of the rubber composition. However, the fumed silica is easily scattered as a powder having a very small bulk density. Therefore, in a Banbury mixer generally used industrially, it has been difficult to knead the fumed silica into the rubber composition even when the kneading is performed for a long period of time, and for example, it has been difficult to knead the fumed silica to a target amount because the fumed silica is scattered even when the fumed silica is blended into the rubber composition little by little several times. In addition, even when the fumed silica can be kneaded, the fumed silica is easily agglomerated in the rubber composition. Therefore, it has been industrially difficult to favorably disperse the fumed silica in the rubber composition.

Patent Literature 4 proposes that a silicon dioxide fine powder (fumed silica) blended in a silicone rubber is mechanically pulverized until a bulk specific gravity is 80 g/L to 300 g/L. However, since the mechanically pulverized silicon dioxide fine powder (fumed silica) in Patent Literature 4 has a specific surface area of 80 $m^2$/g to 180 $m^2$/g, when the silicon dioxide fine powder is blended into the rubber composition for the heavy-duty tire, the performance required for the rubber composition for the heavy-duty tire such as wear resistance performance cannot be exhibited. Therefore, in order to exhibit the performance required for the rubber composition for the heavy-duty tire, a method for industrially kneading the fumed silica into the rubber composition and a rubber composition blended with the fumed silica are required.

Citation List

Patent Literature

Patent Literature 1: Japanese Patent Laid-Open No. 2015-183062
Patent Literature 2: Japanese Patent Laid-Open No. 2016-104840
Patent Literature 3: Japanese Patent Laid-Open No. 2019-94463
Patent Literature 4: Japanese Patent Laid-Open No. H06-87609


Summary of Invention

Technical Problem

An object of the present invention is to easily produce a rubber composition containing a fumed silica by a

mixer type kneading apparatus generally used industrially. In addition, an object of the present invention is to provide a rubber composition containing a fumed silica, which can be easily produced by a mixer type kneading apparatus generally used industrially, and the fumed silica contained therein.

Solution to Problem

A gist of the present invention is as follows.

(1) A method for producing a rubber composition including:

a step of applying a compression process to a fumed silica having a BET specific surface area of 200 $m^2/g$ or more to obtain a compressed fumed silica having a tap density of 200 g/L or more; and
a step of kneading the compressed fumed silica and a diene rubber.

(2) The method for producing a rubber composition according to (1), in which the diene rubber is a natural rubber or an isoprene rubber.
(3) The method for producing a rubber composition according to (1) or (2), in which a vibration mill or a ball mill is used in the compression process.
(4) The method for producing a rubber composition according to any one of (1) to (3), in which the fumed silica before the compression process is subjected to a heat treatment.
(5) The method for producing a rubber composition according to any one of (1) to (4), in which the step of kneading the compressed fumed silica and the diene rubber is a step of kneading the compressed fumed silica, the diene rubber, and a silane coupling agent.
(6) A fumed silica for rubber composition, which is obtained by a surface treatment with a mercapto-thiocarboxylate oligomer, in which a tap density is 200 g/L or more and a BET specific surface area is 200 $m^2/g$ or more.
(7) A rubber composition containing: a compressed fumed silica having a tap density of 200 g/L or more and a BET specific surface area of 200 $m^2/g$ or more; a natural rubber; and a mercapto-thiocarboxylate oligomer.

Advantageous Effects of Invention

According to the present invention, a rubber composition containing a fumed silica can be easily produced by a mixer type kneading apparatus generally used industrially. In addition, according to the present invention, it is possible to provide a rubber composition containing a fumed silica, which can be easily produced by a mixer type kneading apparatus generally used industrially, and the fumed silica contained therein.

Description of Embodiments

First, a method for producing a rubber composition according to the present embodiment will be described in detail.
The method for producing a rubber composition according to the present embodiment includes:

a step of applying a compression process to a fumed silica having a BET specific surface area of 200 $m^2/g$ or more to obtain a compressed fumed silica having a tap density of 200 g/L or more; and
a step of kneading the compressed fumed silica and a diene rubber.

In the present embodiment, the method for producing a rubber composition includes the step of applying the compression process to the fumed silica to obtain the compressed fumed silica. The fumed silica is silicon dioxide in a form of fine particles produced by high temperature hydrolysis of silicon tetrachloride in an oxyhydrogen flame, and may be referred to as a pyrogenic silica. The fine particles of the fumed silica are aggregated and fused into a bead form, and form a bulky agglomerate.
In the present embodiment, the fumed silica having a tap density of 200 g/L or more and a BET specific surface area of 200 $m^2/g$ or more is obtained by applying the compression process to the fumed silica (hereinafter, the fumed silica obtained by the compression process may be referred to as the compressed fumed silica).
In the present embodiment, the above fumed silica and compressed fumed silica are used for producing a rubber composition. Therefore, in the present description, the above fumed silica and compressed fumed silica are also referred to as a fumed silica for rubber composition.
In the present embodiment, the BET specific surface area of the fumed silica before the compression process is 200 $m^2/g$ or more. The BET specific surface area of the fumed silica before the compression process is preferably

220 $m^2/g$ or more, and more preferably 250 $m^2/g$ or more. By using the fumed silica having a BET specific surface area within the above range, the number of silanol groups serving as a reaction site with the diene rubber or a silane coupling agent to be described later can be sufficiently secured, and the compressed fumed silica to be described later can be favorably kneaded with the diene rubber. An upper limit of the BET specific surface area of the fumed silica is not particularly limited, and may be 500 $m^2/g$.

In the present embodiment, the tap density of the fumed silica before the compression process may be less than 200 g/L. The tap density of the fumed silica before the compression process may be 100 g/L or less, or 45 g/L or less. The tap density of the fumed silica can be increased by the compression process to be described later. A lower limit of the tap density of the fumed silica before the compression process is not particularly limited, and may be 30 g/L.

In the present embodiment, the compression process refers to a process for increasing the tap density of the fumed silica. An apparatus used for the compression process is not particularly limited as long as it can increase the tap density by pulverizing the fumed silica, and a vibration mill or a ball mill is preferred, and a vibration mill is more preferred. The vibration mill is a vibration type fine pulverizer, and the ball mill is a pulverizer that makes a fine powder by grinding a material by rotating a hard ball in a cylindrical container. In the present embodiment, the fumed silica is subjected to the compression process using a compression process apparatus such as a vibration mill or a ball mill to obtain the compressed fumed silica.

In the compression process, mechanical energy such as impact, friction, or pulverization is applied to the fumed silica. As a result, it is considered that a surface of the fumed silica is activated, the silanol group on the surface of the fumed silica is cleaved, and the number of surface hydroxy groups increases. Then, the increase in the number of the surface hydroxy groups in the fumed silica occurs not only in the outermost surface layer but also in the inner layer. It is known that the surface-activated fumed silica does not lose activity unless the fumed silica is sufficiently heated. That is, the compressed fumed silica obtained by the compression process can stably maintain a state in which the surface is activated and the number of the surface hydroxy groups is increased for a long period of time. Therefore, in the present embodiment, by the compression process, a reaction between the compressed fumed silica and the diene rubber or the silane coupling agent is promoted, and the compressed fumed silica, which can be favorably kneaded with the diene rubber and has excellent storage stability, is obtained.

In the present embodiment, the tap density of the fumed silica after the compression process, that is, the compressed fumed silica is 200 g/L or more. The tap density of the compressed fumed silica is preferably 250 g/L or more, and more preferably 300 g/L or more. When the tap density of the compressed fumed silica is within the above range, scattering and floating of particles can be reduced, and the compressed fumed silica can be favorably kneaded with the diene rubber. In addition, the tap density of the compressed fumed silica is preferably 400 g/L or less. When the tap density is too large, the silica is likely to form a mass, and a step is required to loosen the mass before the rubber composition is produced or before the rubber composition is kneaded with the diene rubber. In this case, it is difficult to perform a continuous operation process, and the production cost may increase.

In the present embodiment, the tap density of the compressed fumed silica can be controlled by adjusting compression process conditions. For example, preferred compression process conditions when a ball mill or a vibration mill is used as the compression process apparatus are shown below.

<u>Ball Mill</u>

1) Ball Diameter

The ball diameter of the ball mill is preferably 15 mm to 30 mm, and more preferably 20 mm to 25 mm. When the ball diameter is too small, there is a concern that the tap density of the compressed fumed silica cannot be increased due to insufficient impact force during pulverization. In addition, when the ball diameter is too small, it is necessary to extend the pulverization time in order to make the tap density of the compressed fumed silica 200 g/L or more, which may decrease productivity and increase production cost. When the ball diameter is too large, since a gap between balls is large and a collision frequency is low, the pulverization time may be extended, and the production cost may increase.

2) Rotation Speed

The rotation speed of the ball mill is preferably 50 rpm to 600 rpm, and more preferably 200 rpm to 400 rpm. When the rotation speed is too small, there is a concern that the tap density of the compressed fumed silica cannot be increased due to insufficient impact force during pulverization. In addition, when the rotation speed is too small, it is necessary to extend the pulverization time in order to make the tap density of the compressed fumed silica 200 g/L or more, which may decrease the productivity and increase the production cost. When the rotation speed is too large, the pulverization efficiency may decrease.

3) Ball Filling Rate

The ball filling rate of the ball mill is preferably 10% to 80%, and more preferably 20% to 50%. When the ball filling rate is too small, there is a concern that the tap density of the compressed fumed silica cannot be increased due to insufficient pulverization efficiency. In addition, when the ball filling rate is too small, it is necessary to extend the pulverization time in order to make the tap density of the compressed fumed silica 200 g/L or more, which may decrease the productivity and the production cost. When the ball filling rate is too large, the pulverization efficiency may decrease.

Vibration Mill

1) Ball Diameter

The ball diameter of the vibration mill is preferably 15 mm to 30 mm, and more preferably 20 mm to 25 mm. When the ball diameter is too small, there is a concern that the tap density of the compressed fumed silica cannot be increased due to insufficient impact force during pulverization. In addition, when the ball diameter is too small, it is necessary to extend the pulverization time in order to make the tap density of the compressed fumed silica 200 g/L or more, which may decrease the productivity and the production cost. When the ball diameter is too large, since a gap between the balls is large and a collision frequency is low, the pulverization time may be extended, and the production cost may increase.

2) Vibration Frequency

The vibration frequency of the vibration mill is preferably 600 CPM to 2000 CPM, and more preferably 800 CPM to 1500 CPM. When the vibration frequency is too small, there is a concern that the tap density of the compressed fumed silica cannot be increased due to insufficient impact force during pulverization. In addition, when the vibration frequency is too small, it is necessary to extend the pulverization time in order to make the tap density of the compressed fumed silica 200 g/L or more, which may decrease the productivity and the production cost. When the vibration frequency is too large, there are concerns that the impact force is increased and stable pulverization cannot be possible.

3) Ball Filling Rate

The ball filling rate of the vibration mill is preferably 30% to 90%, and more preferably 50% to 80%. When the ball filling rate is too small, there is a concern that the tap density of the compressed fumed silica cannot be increased due to insufficient pulverization efficiency. In addition, when the ball filling rate is too small, it is necessary to extend the pulverization time in order to make the tap density of the compressed fumed silica 200 g/L or more, which may decrease the productivity and the production cost. When the ball filling rate is too large, the pulverization efficiency may decrease.

In the present embodiment, the BET specific surface area of the compressed fumed silica is preferably 200 $m^2/g$ or more, more preferably 220 $m^2/g$ or more, and still more preferably 250 $m^2/g$ or more. By setting the BET specific surface area of the compressed fumed silica within the above range, the number of the silanol groups serving as the reaction site with the diene rubber or the silane coupling agent in the compressed fumed silica can be sufficiently secured, and the compressed fumed silica can be favorably kneaded with the diene rubber. An upper limit of the BET specific surface area of the compressed fumed silica is not particularly limited, and may be 500 $m^2/g$.

In the present embodiment, the method for producing a rubber composition includes the step of kneading the compressed fumed silica and the diene rubber. A blending amount of the compressed fumed silica is preferably 5 to 90 parts by weight, and more preferably 10 to 55 parts by weight, with respect to 100 parts by weight of the diene rubber. When the blending amount of the compressed fumed silica is too small, there is a concern that wear resistance performance of the obtained rubber composition cannot be sufficiently improved. When the blending amount of the compressed fumed silica is too large, there is a concern that the silica cannot be sufficiently dispersed in the diene rubber and cannot be favorably kneaded in the diene rubber.

In the present embodiment, examples of the diene rubber include a natural rubber, an isoprene rubber, a butadiene rubber, a styrene-butadiene rubber, an acrylonitrile-butadiene rubber, a butyl rubber, an ethylene-propylene-diene rubber, and a chloroprene rubber. Among them, a natural rubber and an isoprene rubber are preferred, and a natural rubber is most preferred. According to the production method of the present embodiment, even in the case of kneading with a natural rubber derived from agricultural products and having a viscosity or composition likely to vary depending on the season and production area, it is possible to perform the kneading by a mixer type kneading apparatus generally used industrially.

The kneading of the compressed fumed silica and the diene rubber may be performed using a mixer type kneading apparatus generally used industrially in production of the rubber composition, and for example, a Banbury

mixer can be used. Operating conditions of the apparatus are not particularly limited as long as the compressed fumed silica and the diene rubber can be sufficiently kneaded.

In the present embodiment, by blending the silane coupling agent to be described later, dispersibility of the compressed fumed silica to the diene rubber can be improved, and a reinforcing property to the rubber can be improved. The silane coupling agent may be blended before the above compression process, or may be blended during or after the compression process. When the silane coupling agent is to be blended before the compression process, for example, the silane coupling agent can be sprayed to the fumed silica using a spray reactor. When the spraying is performed, heating may be performed as necessary. By blending the silane coupling agent to the fumed silica by spraying or the like, the fumed silica can be subjected to a surface treatment (hereinafter, the fumed silica subjected to a surface treatment may be referred to as a surface-treated fumed silica). When the silane coupling agent is to be blended during the compression process, for example, the silane coupling agent can be added into the apparatus when the compression process is applied to the fumed silica by a compression process apparatus such as a vibration mill. When the blending is performed after the compression process, the compressed fumed silica, the diene rubber, and the silane coupling agent may be kneaded in a mixer type kneading apparatus.

In the present embodiment, as described above, the surface treatment is performed by spraying a liquid silane coupling agent to the fumed silica before or after the compression process. The surface-treated fumed silica thus obtained is different from a so-called hydrophobized silica and has a hydrophilic property.

A blending amount of the silane coupling agent is preferably 3 to 30 parts by weight, and more preferably 5 to 20 parts by weight, with respect to 100 parts by weight of the compressed fumed silica or the fumed silica. When the blending amount of the silane coupling agent is too small, the dispersibility of the compressed fumed silica may be insufficient. When the blending amount of the silane coupling agent is too large, there are concerns that silane coupling agents are subjected to condensation and the wear resistance performance of the obtained rubber composition cannot be sufficiently improved.

Kinds of the silane coupling agent are not particularly limited as long as the silane coupling agent can be used in a diene rubber composition, and examples thereof include a sulfur-containing silane coupling agent such as bis-(3-triethoxysilylpropyl) tetrasulfide, bis(3-triethoxysilylpropyl) disulfide, 3-trimethoxysilylpropylbenzothiazole tetrasulfide, γ-mercaptopropyltriethoxysilane, 3-octanoylthiopropyltriethoxysilane, or a mercapto-thiocarboxylate oligomer.

In the present embodiment, when a natural rubber is used as the diene rubber, a mercapto-thiocarboxylate oligomer is preferably used as the silane coupling agent. That is, the fumed silica before or after the compression process is preferably surface-treated with the mercapto-thiocarboxylate oligomer.

The mercapto-thiocarboxylate oligomer is a thiocarboxylate oligomer having a mercapto group, and examples of a molecular structure of the mercapto-thiocarboxylate oligomer are shown below. In the following molecular structure, a sum (x+y) of a repeating number (x) of a linking unit A and a repeating number (y) of a linking unit B is preferably in a range of 3 to 300. Within this range, mercaptosilane of the linking unit B is covered with $-C_7H_{15}$ of the linking unit A, so that a scorch time can be prevented from being shortened and good reactivity with a silica or a rubber component can be secured. As the mercapto-thiocarboxylate oligomer, specifically, "NXT-Z45" manufactured by Momentive can be used.

[Chem. 1]

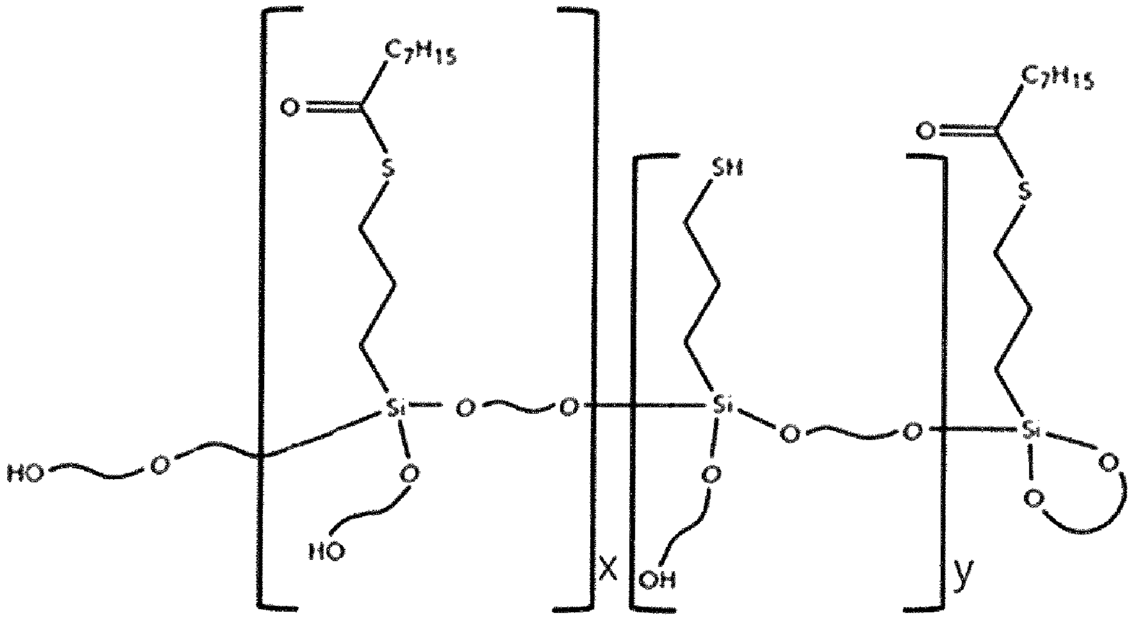


Therefore, in the present embodiment, a preferred embodiment of the fumed silica for rubber composition is as follows.

A fumed silica for rubber composition, which is obtained by a surface treatment with a mercapto-thiocarboxylate oligomer, in which

a tap density is 200 g/L or more and
a BET specific surface area is 200 $m^2/g$ or more.

Rubber Composition

The rubber composition according to the present embodiment is produced by the above method. Preferably, the rubber composition is produced by kneading the natural rubber and the fumed silica for rubber composition surface-treated with the mercapto-thiocarboxylate oligomer.

When the above silane coupling agent is to be blended after the compression process of the fumed silica, the rubber composition is produced by kneading the fumed silica for rubber composition, the diene rubber, and the silane coupling agent. As described above, the silane coupling agent is preferably the mercapto-thiocarboxylate oligomer.

Therefore, in the present embodiment, a preferred embodiment of the rubber composition is as follows.
A rubber composition, which is obtained by blending:

a compressed fumed silica having a tap density of 200 g/L or more and a BET specific surface area of 200 $m^2/g$ or more;
a natural rubber; and
a mercapto-thiocarboxylate oligomer.

In the present embodiment, the rubber composition is preferably a rubber composition used for a tire, particularly a tire tread, and more preferably a rubber composition used for a heavy-duty tire or a tire tread thereof.

In the present embodiment, the method for producing a rubber composition may include a step of adding an oil. That is, the oil may be blended into the rubber composition. Examples of the oil include an aromatic oil, a paraffin oil, and a naphthenic oil. These may be used alone, or may be used in a combination of two or more kinds. A blending amount of the oil is preferably 2 to 10 parts by weight, and more preferably 4 to 8 parts by weight, with respect to 100 parts by weight of the diene rubber.

The above step of adding the oil may be performed before a step of kneading with the diene rubber, and for example, the above oil may be preliminarily mixed with the compressed fumed silica. Alternatively, the above oil may

be added in the step of kneading the compressed fumed silica and the diene rubber.

In the present embodiment, the method for producing a rubber composition may include a step of adding a reinforcing filler. That is, the reinforcing filler may be blended into the rubber composition. Examples of the reinforcing filler include carbon black, clay, mica, talc, calcium carbonate, aluminum hydroxide, aluminum oxide, and titanium oxide. When the rubber composition used for a tire or a tire tread is to be produced, such a reinforcing filler may be blended. Further, when the reinforcing filler is to be blended, a filler coupling agent can also be blended in an appropriate amount. A blending amount of these reinforcing fillers may be a general blending amount in the related art as long as it does not violate the object of the present invention.

In the present embodiment, the method for producing a rubber composition may include a step of adding various additives such as a vulcanization or crosslinking agent, a vulcanization accelerator, sulfur, zinc oxide, stearic acid, an antioxidant, a plasticizer other than those described above, a processing aid, a liquid polymer, and a thermosetting resin. That is, the above various additives may be blended into the rubber composition. Such additives can be blended before or after kneading the diene rubber, and assist in vulcanization or crosslinking of the rubber composition. When the rubber composition used for a tire or a tire tread is to be produced, such additives may be blended. A blending amount of these additives may be a conventional general blending amount as long as it does not violate the object of the present invention.

In the present embodiment, the method for producing a rubber composition may include a step of adding a precipitated silica. That is, the precipitated silica can be blended into the rubber composition. The precipitated silica is a silica synthesized by a neutralization reaction between generally sodium silicate and a mineral acid (usually sulfuric acid). The precipitated silica is generally classified into a precipitated silica and a gel silica. In the present embodiment, the precipitated silica is preferably blended. A blending amount of the precipitated silica is preferably 0 to 100 parts by weight, and more preferably 0 to 60 parts by weight, with respect to 100 parts by weight of the diene rubber. The precipitated silica may be mixed with the compressed fumed silica before the step of kneading with the diene rubber, or may be added in the step of kneading the compressed fumed silica and the diene rubber. By blending the precipitated silica, a blending amount of an expensive fumed silica can be reduced. When the blending amount of the precipitated silica is too small, the obtained rubber composition may be expensive. When the blending amount of the precipitated silica is too large, there is a concern that the wear resistance performance of the rubber composition cannot be sufficiently improved. A ratio of the blending amount of the fumed silica to the blending amount of the precipitated silica is not particularly limited as long as it does not violate the object of the present invention.

Hereinafter, the present invention will be described with reference to Examples, but the present invention is not limited to the following Examples.

(Example 1-1)

[Preparation of Surface-treated Fumed Silica]

The fumed silica was subjected to a surface treatment. That is, 10.0 kg of a fumed silica (QS-30C manufactured by Tokuyama Corporation, nitrogen adsorption specific surface area: 300 $m^2/g$) was stirred and mixed in a mixer having an internal volume of 300 L, and the atmosphere was replaced with a nitrogen atmosphere. At a reaction temperature of 25°C, 2 parts by weight of water was added to the fumed silica by using a single fluid nozzle. Thereafter, a silane coupling agent (mercapto-thiocarboxylate oligomer (NXT-Z45 manufactured by Momentive)) was added to the fumed silica by using the single fluid nozzle such that a blending amount thereof was 8 parts by weight with respect to 100 parts by weight of the fumed silica. The temperature was raised to 200°C at a rising temperature of 100°C/hr, and nitrogen was supplied at a supply rate of 40 L/min to remove an unreacted material and a reaction by-product. The surface-treated fumed silica was obtained.

[Preparation of Compressed Fumed Silica]

The obtained surface-treated fumed silica was subjected to a compression process. That is, 200 g of the surface-treated fumed silica was charged into a 7 L ball mill (ball diameter φ: 25 mm, ball filling: 30%, 300 rpm), and was pulverized at room temperature for 5 hours. A compressed fumed silica I was obtained.

Tap densities and specific surface areas of the fumed silica, the surface-treated fumed silica, and the compressed fumed silica after the compression process were evaluated according to the following methods. Results are shown in Table 1. The expression "after compression process" refers to a case where the fumed silica and the surface-treated fumed silica were subjected to the compression process, respectively, under the above conditions.

<Fumed Silica: Tap Density>

A 1 L resin-made graduated cylinder was placed on an electronic balance, tared, and filled with about 1 L of

the fumed silica, and a weight M (g) was recorded. Thereafter, tapping was manually performed 30 times from a height of about 10 cm, then a volume V (ml) was measured, and a tap density ρ was calculated according to the following equation. The same calculation was performed on the surface-treated fumed silica. In addition, the same calculation was performed on the fumed silica and the surface-treated fumed silica after the compression process, respectively.

$$\text{Tap density } \rho = 1000 \times M/V \text{ (g/L)}$$

<Fumed Silica: Specific Surface Area>

A specific surface area of the fumed silica was measured by a nitrogen adsorption BET one-point method using a BET specific surface area measuring apparatus SA-1000 manufactured by SIBATA Scientific Technology Ltd. The same measurement was performed on the surface-treated fumed silica. In addition, the same measurement was performed on the fumed silica and the surface-treated fumed silica after the compression process, respectively.

(Example 1-2)

A surface-treated fumed silica was obtained in the same manner as in Example 1-1. The obtained surface-treated fumed silica was subjected to the compression process. That is, the surface-treated fumed silica was supplied to a 1 $m^3$ continuous vibration mill (ball diameter φ: 25 mm, silica supply rate: 100 g/min, ball filling amount: 80%, vibration frequency: 1200 CPM, amplitude: 8 mm) and pulverized. A compressed fumed silica II was obtained. The tap density and the specific surface area were evaluated in the same manner as in Example 1-1.

(Example 1-3)

A surface-treated fumed silica was obtained in the same manner as in Example 1-1 except that a silane coupling agent (mercapto-thiocarboxylate oligomer (NXT-Z45 manufactured by Momentive)) was added such that a blending amount thereof was 4 parts by weight with respect to 100 parts by weight of the fumed silica in the preparation of the surface-treated fumed silica. A compressed fumed silica III was obtained in the same manner as in Example 1-1. The tap density and the specific surface area were evaluated in the same manner as in Example 1-1.

(Example 1-4)

The fumed silica was subjected to the compression process without a surface treatment. That is, the fumed silica (QS-30C manufactured by Tokuyama Corporation, nitrogen adsorption specific surface area: 300 $m^2/g$) was supplied to a 1 $m^3$ continuous vibration mill (ball diameter φ: 25 mm, silica supply rate: 100 g/min, ball filling amount: 80%, vibration frequency: 1200 CPM, amplitude: 8 mm) and pulverized. A compressed fumed silica IV was obtained. The tap density and the specific surface area were evaluated in the same manner as in Example 1-1.

(Example 1-5)

The fumed silica was subjected to the compression process without a surface treatment. That is, 200 g of the fumed silica (QS-30C manufactured by Tokuyama Corporation, nitrogen adsorption specific surface area: 300 $m^2/g$) was charged into a 7 L ball mill (ball diameter φ: 25 mm, ball filling: 30%, 300 rpm), and was pulverized at room temperature for 5 hours. A compressed fumed silica V was obtained. The tap density and the specific surface area were evaluated in the same manner as in Example 1-1.

(Example 1-6)

The fumed silica was subjected to the compression process without a surface treatment. That is, a compressed fumed silica VI was obtained in the same manner as in Example 1-5 except that the fumed silica (QS-25 manufactured by Tokuyama Corporation, nitrogen adsorption specific surface area: 250 $m^2/g$) was used. The tap density and the specific surface area were evaluated in the same manner as in Example 1-1.

[Table 1]

| Example | Fumed silica | Silane coupling agent (blending amount with respect to 100 parts by weight of fumed silica) | Before compression process | | Compression process apparatus | After compression process | |
|---|---|---|---|---|---|---|---|
| | | | Specific surface area | Tap density | | Specific surface area | Tap density |
| | | | $m^2/g$ | g/L | | $m^2/g$ | g/L |
| 1-1 | QS-30C | 8 parts by mass | 302 | 93 | Ball mill | 233 | 215 |
| 1-2 | QS-30C | 8 parts by mass | 297 | 107 | Vibration mill | 221 | 267 |
| 1-3 | QS-30C | 4 parts by mass | 300 | 105 | Ball mill | 225 | 290 |
| 1-4 | QS-30C | - | 298 | 103 | Vibration mill | 293 | 290 |
| 1-5 | QS-30C | - | 304 | 97 | Ball mill | 298 | 268 |
| 1-6 | QS-25 | - | 250 | 51 | Ball mill | 245 | 273 |

(Example 2-1)

[Preparation of Rubber Composition]

The above compressed fumed silica I, a natural rubber, a butadiene rubber, a precipitated silica, a silane coupling agent (mercapto-thiocarboxylate oligomer (NXT-Z45 manufactured by Momentive)), and carbon black were charged into a 1.7 L closed Banbury mixer so as to have blending amounts shown in Table 3, and compounding agents (zinc oxide, stearic acid, an antioxidant, and an oil) were charged into the closed Banbury mixer so as to have blending amounts shown in Table 2. The above mixture was kneaded for 6 minutes and cooled to room temperature to obtain a master batch. The master batch was returned to the 1.7 L closed Banbury mixer, and the remaining compounding agents (1.5 parts by weight of sulfur and a vulcanization accelerator) were added and mixed to prepare a rubber composition.

Kinds of the above raw materials used in the preparation of the rubber composition are shown below.

- ·Natural rubber: CV-60 made in Vietnam
- ·Butadiene rubber: Nipol BR 1220 manufactured by Zeon Corporation
- ·Precipitated silica: Nipsil AQ (nitrogen adsorption specific surface area: 200 $m^2/g$) manufactured by Tosoh Silica Corporation
- ·Carbon black: "SEAST 6" manufactured by Tokai Carbon Co., Ltd.

[Table 2]

| Compounding agent | Blending amount with respect to 100 parts by weight of rubber |
|---|---|
| Zinc oxide | 3 parts by weight |
| Stearic acid | 3 parts by weight |
| Antioxidant | 2 parts by weight |
| Oil | 2 parts by weight |
| Sulfur | 1.5, 1.9, or 2.3 parts by weight |
| Vulcanization accelerator | 1.2 parts by weight |

Kinds of the compounding agents shown in Table 2 are shown below.

·Zinc oxide: zinc oxide Type III manufactured by SEIDO Chemical Industry Co., Ltd.
·Stearic acid: Stearic Acid Beads YR manufactured by NOF Corporation
·Antioxidant: OZONONE 6C manufactured by Seiko Chemical Co., Ltd.
·Oil: extract No. 4 S (TDAE Oil) manufactured by Showa Shell Sekiyu K.K.
·Sulfur: Gold Flower brand oil-containing sulfur powder manufactured by Tsurumi Chemical Accelerator Co., Ltd.
·Vulcanization accelerator: Sanceler NS-G, N-(tert-butyl)-2-benzothiazolesulfenamide (abbreviation: TBBS) manufactured by SANSHIN Chemical Industry Co. Ltd.

The obtained rubber composition was press-vulcanized at 150°C for 10 minutes to prepare a test piece made of the rubber composition. The following physical properties were evaluated by using the obtained test piece. Results are shown in Table 3.

<Rubber Composition: Wear Resistance>

An FPS wear amount of the obtained test piece made of the rubber composition was measured using an FPS wear tester (AB-2012 manufactured by Ueshima Seisakusho Co., Ltd.) under conditions including a temperature of 20°C, a load of 40 N, a slip ratio of 10%, and a test time of 2 minutes. A volume loss was calculated based on the FPS wear amount, and was expressed as an index according to the following calculation equation with a loss amount in Standard Example 1 being 100. The larger the index, the better the wear resistance.

$$\text{(Wear index)} = \text{(loss amount in Standard Example 1)} \div \text{(loss amount in Examples)} \times 100$$

<Fuel efficiency: Tanδ (60°C)>

The obtained test piece made of the rubber composition was measured in accordance with JIS K6394 using a dynamic viscoelastic tester (VR-7130 manufactured by Ueshima Seisakusho Co., Ltd.) under the following conditions. The tanδ (60°C) was calculated based on a measured value at 60°C.

Measurement temperature: 60°C
Static strain: 10%
Dynamic strain: ± 2%
Frequency: 10 Hz

An index was calculated according to the following equation with a measured value in Standard Example 1 being 100. The larger the index, the better the rolling resistance.

$$\text{(Rolling resistance index)} = \text{(measured value in Standard Example 1)} \div \text{(measured value in Examples)} \times 100$$

<A Hardness>

The hardness of the obtained test piece made of the rubber composition was measured in accordance with Type A in JIS K6253.

<Workability: Mooney Viscosity>

A Mooney viscosity (ML1+4, 100°C) of the obtained test piece made of the rubber composition at 100°C was measured in accordance with JIS K6300-1 using a Mooney viscosity meter (VR-1132 manufactured by Ueshima Seisakusho Co., Ltd.).

(Example 2-2)

A test piece was obtained by preparing a rubber composition in the same manner as in Example 2-1 except

that blending amounts of the compressed fumed silica I and the precipitated silica were changed as shown in Table 3 in preparation of the rubber composition. Physical properties were evaluated in the same manner as in Example 2-1.

(Example 2-3)

[Preparation of Rubber Composition]

The above compressed fumed silica V, a silane coupling agent (mercapto-thiocarboxylate oligomer (NXT-Z45 manufactured by Momentive)), a natural rubber, a butadiene rubber, a precipitated silica, and carbon black were charged into a 1.7 L closed Banbury mixer so as to have the blending amounts shown in Table 3, and the compounding agents (zinc oxide, stearic acid, am antioxidant, and an oil) were charged into the closed Banbury mixer so as to have the blending amounts shown in Table 2. The above mixture was kneaded for 6 minutes and cooled to room temperature to obtain a master batch. The master batch was returned to the 1.7 L closed Banbury mixer, and the remaining compounding agents (1.5 parts by weight of sulfur and a vulcanization accelerator) were added and mixed to prepare a rubber composition. Kinds of the above raw materials and the compounding agents are the same as those in Example 2-1.

A test piece made of the rubber composition was obtained in the same manner as in Example 2-1. Physical properties were evaluated in the same manner as in Example 2-1.

(Example 2-4)

A test piece was obtained by preparing a rubber composition in the same manner as in Example 2-3 except that blending amounts of the compressed fumed silica V and the precipitated silica were changed as shown in Table 3 in preparation of the rubber composition. Physical properties were evaluated in the same manner as in Example 2-1.

(Example 2-5)

A test piece was obtained by preparing a rubber composition in the same manner as in Example 2-3 except that the precipitated silica was not blended and a blending amount of the compressed fumed silica V was changed as shown in Table 3 in preparation of the rubber composition. Physical properties were evaluated in the same manner as in Example 2-1.

(Example 2-6)

A test piece was obtained by preparing a rubber composition in the same manner as in Example 2-4 except that the butadiene rubber was not blended and a filler coupling agent (SUMILINK 200 manufactured by Sumitomo Chemical Co., Ltd.) was blended in the preparation of the rubber composition. Physical properties were evaluated in the same manner as in Example 2-1 except that a loss amount in Standard Example 2 was set to 100 in the wear resistance and a measured value in Standard Example 2 was set to 100 in the fuel efficiency and the indexes were calculated.

(Example 2-7)

A test piece was obtained by preparing a rubber composition in the same manner as in Example 2-4 except that a natural rubber (SVR made in Vietnam) was used and a blending amount of sulfur was set to 1.9 parts by weight in the preparation of the rubber composition. Physical properties were evaluated in the same manner as in Example 2-1 except that a loss amount in Standard Example 3 was set to 100 in the wear resistance and a measured value in Standard Example 3 was set to 100 in the fuel efficiency and the indexes were calculated.

(Standard Example 1)

[Preparation of Rubber Composition]

A natural rubber, a butadiene rubber, carbon black, and compounding agents (zinc oxide, stearic acid, an antioxidant, and an oil) were charged into a 1.7 L closed Banbury mixer so as to have the blending amounts shown in Table 3, and the above mixture was kneaded for 6 minutes and cooled to room temperature to obtain a master batch. The master batch was returned to the 1.7 L closed Banbury mixer, and the remaining compounding agents (1.5 parts by weight of sulfur and a vulcanization accelerator) were added and mixed to prepare a silica-free rubber composition. Blending amounts of the compounding agents are shown in Table 2. Kinds of the above raw materials and the compounding agents are the same as those in Example 2-1.

A test piece made of the rubber composition was obtained in the same manner as in Example 2-1. Physical properties were evaluated in the same manner as in Example 2-1.

(Standard Example 2)

A test piece was obtained by preparing a rubber composition in the same manner as in Standard Example 1 except that the butadiene rubber was not blended in the preparation of the rubber composition. Physical properties were evaluated in the same manner as in Example 2-1.

(Standard Example 3)

A test piece was obtained by preparing a rubber composition in the same manner as in Standard Example 2 except that a natural rubber (SVR made in Vietnam) was used and a blending amount of sulfur was set to 2.3 parts by weight in the preparation of the rubber composition. Physical properties were evaluated in the same manner as in Example 2-1.

[Table 3]

| Raw material (part by weight) | | Standard Example 1 | Example 2-1 | Example 2-2 | Example 2-3 | Example 2-4 | Example 2-5 | Standard Example 2 | Example 2-6 | Standard Example 3 | Example 2-7 |
|---|---|---|---|---|---|---|---|---|---|---|---|
| NR (natural rubber: CV-60) | | 80 | 80 | 80 | 80 | 80 | 80 | 100 | 100 | - | - |
| NR (natural rubber: SVR) | | - | - | - | - | - | - | - | - | 100 | 100 |
| BR (butadiene rubber) | | 20 | 20 | 20 | 20 | 20 | 20 | - | - | - | - |
| Compressed fumed silica V | | - | - | - | 12.6 | 21 | 42 | - | 21 | - | 21 |
| Compressed fumed silica I | | - | 13.6 | 22.7 | - | - | - | - | - | - | - |
| Precipitated silica | | - | 29.4 | 21 | 29.4 | 21 | - | - | 21 | - | 21 |
| Carbon black | | 55 | 13 | 13 | 13 | 13 | 13 | 55 | 13 | 55 | 13 |
| Filler coupling agent | | - | - | - | - | - | - | - | 2 | - | - |
| Silane coupling agent | | - | 2.4 | 1.7 | 3.4 | 3.4 | 3.4 | - | 3.76 | - | 5.5 |
| (Amount phr of silane coupling agent with respect to amount of silica) | | - | 8.0 | 8.0 | 8.0 | 8.0 | 8.0 | - | 8.0 | - | 13 |
| Physical property | Standard | | | | | | | | | | |
| A hardness | Type A in JIS K6253 | 66 | 61 | 60 | 62 | 63 | 62 | 64 | 60 | 69 | 62 |
| Workability: Mooney Viscosity (ML1+4, 100°C) | JIS K6300-1 | 59 | 62 | 74 | 63 | 77 | 108 | 63 | 86 | 68 | 69 |
| Wear resistance (FPS wear performance) | - | 100 | 118 | 145 | 142 | 144 | 118 | 100 | 104 | 100 | 142 |
| Fuel efficiency (tanδ 60°C) | JIS K6394 | 100 | 133 | 98 | 138 | 115 | 115 | 100 | 193 | 100 | 163 |

## Claims

1. A method for producing a rubber composition comprising:

   a step of applying a compression process to a fumed silica having a BET specific surface area of 200 $m^2/g$ or more to obtain a compressed fumed silica having a tap density of 200 g/L or more; and
   a step of kneading the compressed fumed silica and a diene rubber.

2. The method for producing a rubber composition according to claim 1, wherein the diene rubber is a natural rubber or an isoprene rubber.

3. The method for producing a rubber composition according to claim 1 or 2, wherein a vibration mill or a ball mill is used in the compression process.

4. The method for producing a rubber composition according to any one of claims 1 to 3, wherein the fumed silica before the compression process is subjected to a surface treatment.

5. The method for producing a rubber composition according to any one of claims 1 to 4, wherein the step of kneading the compressed fumed silica and the diene rubber is a step of kneading the compressed fumed silica, the diene rubber, and a silane coupling agent.

6. A fumed silica for rubber composition, which is obtained by a surface treatment with a mercapto-thiocarboxylate oligomer, wherein

   a tap density is 200 g/L or more and
   a BET specific surface area is 200 $m^2/g$ or more.

7. A rubber composition comprising:

   a compressed fumed silica having a tap density of 200 g/L or more and a BET specific surface area of 200 $m^2/g$ or more;
   a natural rubber; and
   a mercapto-thiocarboxylate oligomer.

## INTERNATIONAL SEARCH REPORT

International application No.
**PCT/JP2021/038997**

### A. CLASSIFICATION OF SUBJECT MATTER

***C08K 5/548***(2006.01)i; ***C08K 9/06***(2006.01)i; ***C08L 7/00***(2006.01)i; ***C08L 9/00***(2006.01)i; ***C08K 3/36***(2006.01)i
FI: C08L9/00; C08L7/00; C08K3/36; C08K5/548; C08K9/06

According to International Patent Classification (IPC) or to both national classification and IPC

### B. FIELDS SEARCHED

Minimum documentation searched (classification system followed by classification symbols)

C08L7/00-21/02; C08K3/00-3/40; C08K5/00-5/59; C08K9/00-9/12

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2016-37602 A (YOKOHAMA RUBBER CO LTD) 22 March 2016 (2016-03-22) claims, paragraphs [0010], [0023], [0041]-[0043], examples 5-8 | 1-7 |
| Y | WO 2015/030056 A1 (HARIMA CHEMICALS, INCORPORATED) 05 March 2015 (2015-03-05) paragraphs [0102]-[0103] | 1-7 |
| Y | JP 2004-352606 A (TOKUYAMA CORP) 16 December 2004 (2004-12-16) paragraphs [0003]-[0004] | 1-7 |
| Y | WO 2018/079334 A1 (TOKUYAMA CORP) 03 May 2018 (2018-05-03) paragraphs [0064]-[0066] | 1-7 |
| Y | JP 2016-104840 A (YOKOHAMA RUBBER CO LTD) 09 June 2016 (2016-06-09) claims, paragraphs [0009], [0023]-[0024], [0037], examples 1-7 | 1-7 |
| Y | JP 2003-192842 A (SUMITOMO RUBBER IND LTD) 09 July 2003 (2003-07-09) claims, paragraphs [0011], [0027], [0036], examples 1, 3, 5 | 1-7 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 November 2021** | **07 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2021/038997**

**C. DOCUMENTS CONSIDERED TO BE RELEVANT**

| Category* | Citation of document, with indication, where appropriate, of the relevant passages | Relevant to claim No. |
|---|---|---|
| Y | JP 2020-158709 A (SUMITOMO RUBBER IND LTD) 01 October 2020 (2020-10-01) paragraph [0043] | 6-7 |
| Y | JP 2019-65197 A (ASAHI KASEI CORP) 25 April 2019 (2019-04-25) paragraph [0062] | 6-7 |

Form PCT/ISA/210 (second sheet) (January 2015)

**INTERNATIONAL SEARCH REPORT**
**Information on patent family members**

International application No.
**PCT/JP2021/038997**

| Patent document cited in search report | Publication date (day/month/year) | Patent family member(s) | Publication date (day/month/year) |
|---|---|---|---|
| JP 2016-37602 A | 22 March 2016 | (Family: none) | |
| WO 2015/030056 A1 | 05 March 2015 | US 2016/0208074 A1<br>paragraphs [0104]-[0105]<br>EP 3040360 A1<br>CN 105473644 A | |
| JP 2004-352606 A | 16 December 2004 | US 2006/0269465 A1<br>paragraphs [0003]-[0004]<br>WO 2004/099075 A1<br>EP 1637500 A1<br>KR 10-2006-0015579 A<br>CN 1816494 A | |
| WO 2018/079334 A1 | 03 May 2018 | US 2019/0270914 A1<br>paragraphs [0068]-[0071]<br>EP 3533760 A1<br>KR 10-2019-0077397 A<br>CN 110167879 A | |
| JP 2016-104840 A | 09 June 2016 | (Family: none) | |
| JP 2003-192842 A | 09 July 2003 | (Family: none) | |
| JP 2020-158709 A | 01 October 2020 | (Family: none) | |
| JP 2019-65197 A | 25 April 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015183062 A
- JP 2016104840 A
- JP 2019094463 A
- JP H0687609 A